# EUROPEAN PATENT APPLICATION

(11) **EP 4 319 231 A1**
(43) Date of publication of application: **07.02.2024**
(21) Application number: 22398017.8
(22) Date of filing: 02.08.2022
(51) Int. Cl.: H04W 12/06, H04W 12/63, H04L 9/40

(54) **METHOD OF AUTHENTICATING A USER TERMINAL**

(71) Applicant: Vodafone Portugal - Comunicações Pessoais, S.A., 1998-017 Lisboa (PT); Vodafone Group Services Limited, Newbury RG14 2FN (GB)
(72) Inventor: Ribeiro Santos, Rudolfo, 1998-017 Lisboa (PT)
(74) Representative: Boult Wade Tennant LLP

(57) **Abstract**

A method of authenticating a user terminal having an associated IP address is provided. The method comprises transmitting an authentication message from an authentication server to a user device associated with the user terminal. The authentication message is transmitted to the user device at least in part over a Radio Access Network (RAN), wherein the RAN generates location information of the user device when transmitting the authentication message to the user device. The user terminal is authenticated based on a comparison of a location associated with the IP address of the user terminal and the location information of the user device.

## Description

### Field of the disclosure

The present disclosure relates to authentication of a user terminal. In particular, the present disclosure relates to a multifactor authentication of a user terminal.

### Background

Multifactor authentication is a method which can be used to control access to a website, application, service and the like. As such, a user, or a user operating a user terminal can demonstrate (authenticate) that they have appropriate permissions to access the desired website/application/service etc.

Multifactor authentication methods generally require at least two pieces of information (factors) in order to authenticate a user.

US2020204566A1 discloses a method of multifactor authentication in which uses an access control device to authenticate a user device. In response to detecting a beacon signal transmitted by a user equipment via a short-range radio access technology, the access control device sends a query to a location server for a current location of the user equipment. The access control device then determines whether the user equipment is within a threshold distance of the access control device and, if so, begins monitoring a signal strength of one or more beacon signals transmitted by the user equipment. If the signal strength of the one or more beacon signals exceeds a signal strength threshold, then the access control device may generate an access signal to indicate that a user associated with the user equipment is authorized to access a protected resource.

GB2490099A discloses a method of multi-factor authentication through a mobile device location based service. A mobile device initiates a multi-factor authentication process, typically used by remote access systems, by sending a Short Message Service (SMS) text communication to a number that corresponds to an authenticating server or its related systems.

Against this background, the present disclosure seeks to provide an improved, or at least commercially relevant alternative method of authenticating a user terminal, an authentication server, and a user terminal.

### Summary

According to a first aspect of the disclosure, a method of authenticating a user terminal having an associated IP address is provided. The method comprises:
transmitting an authentication message from an authentication server to a user device associated with the user terminal,
wherein the authentication message is transmitted to the user device at least in part over a Radio Access Network (RAN),
wherein the RAN generates location information of the user device when transmitting the authentication message to the user device;
authenticating the user terminal based on a comparison of a location associated with the IP address of the user terminal and the location information of the user device.

According to the method of the first aspect, a user terminal is authenticated based on a comparison of a location associated with the IP address of the user terminal and the location information of the user device. Accordingly, one piece of information used to authenticate the user is provided by the RAN, which generates location information of the user device. As the location information of the user device is generated by the RAN (which is independent from the user device), the method of the first aspect provides an additional layer of security to the method of authenticating a user terminal.

In particular, the method is resistant to attempts to impersonate the user device (e.g. spoof or clone the user device) by a third party. For example, where a third party clones a user device (a cloned device), the RAN will generate location information associated with the cloned device should the authentication message be transmitted to the cloned device. Where the location of the cloned device does not correspond to the location associated with the IP address of the user terminal, the method of may not authenticate the user terminal. As such, by using the RAN to generate information used in the authentication process, the method of the first aspect provides additional security against user device impersonation type attacks.

According to the first aspect, the user terminal may be computing device, mobile device and the like which is to be authenticated. The user terminal has an associated Internet Protocol (IP) address which is used to identify the device for communications across the internet. It is understood that IP addresses include at least some form of location information associated with them. Typically, an IP address can be used to identify at least a general region of the user terminal based on the IP address. Accordingly, the method can identify at least some form of location (e.g. a geographic region) associated with the user terminal based on the IP address. Such a location can be compared with the location information of the user device, upon which a decision to authenticate the user terminal can be taken. For example, when the location information of the user device falls within the geographic region associated with the IP address of the user terminal, the method may authenticate the user terminal. When the location of the user device indicates that the user device is located in a different country to the location associated with the IP address of the user terminal, such a circumstance may be indicative of user device impersonation and the authentication of the user terminal may be declined.

In some embodiments, the method further comprises inputting the authentication message transmitted to the user device into the user terminal, wherein the user terminal transmits the authentication message to the authentication server, and the authentication server authenticating the user terminal based on a comparison of the location associated with the IP address of the user terminal and the location information of the user device, and the authentication message.

As such, the method according to the first aspect may also incorporate additional factors (pieces of information) into the method of authenticating a user terminal. As such, the method of authenticating a user according to the first aspect may be a method of multifactor authentication. In some embodiments, the method may also comprise a user entering an username and an associated password into the user terminal, wherein the authentication server authenticates the username and password combination. In some embodiments, the authentication server may only transmit the authentication message to the user device upon receipt of a username and password associated with the user device.

In some embodiments, the user terminal is authenticated when the location associated with the IP address and the location information of the user device are within a predetermined distance of each other. In some embodiments, the predetermined distance may depend on the location associated with the IP address. In some embodiments, the location associated with the IP address may be a geographic region. For example, in some embodiments the location associated with the IP address may be a continent, a country, a state or county or department within a country, or a city or town within a country. In some embodiments, the authentication server may know a location associated with an IP address, for example by reference to a database. As such, the location associated with the IP address may be an address such as an office, factory, workplace, or house. The predetermined distance may be chosen based on the nature of the location associated with the IP address. For example, where the location associated with the IP address is a geographic region is a town, there may be a degree of uncertainty regarding the exact user terminal location. Accordingly, the predetermined range may be increased to avoid generating false negatives based. In some embodiments, predetermined distance may be chosen based on the desired security level of the authentication. A shorter predetermined distance provides greater security, but may increase the generation of false negatives. Depending on the authentication preferences, the predetermined distance may in some embodiments be no greater than 100 km, 10 km, 1 km, 500 m, 100 m, 50 m, or 10 m.

In some embodiments, the IP address associated with the user terminal is an IP address of a Virtual Private Network (VPN) or the IP address of the user terminal. As such, in some embodiments the location associated with the user terminal may be a location which is derived from the IP address of the VPN.

In some embodiments, the authentication server includes a list of trusted locations, and the user terminal is authenticated based on a comparison of the location associated with the IP address of the user terminal, the location information of the user device, and the list of trusted locations. In some embodiments, the list of trusted locations comprises a list of trusted locations for the user device. As such, the authentication may include determining whether the location information of the user device generated by the RAN indicates that the user device is located within a trusted location of the list of trusted locations for the user device. In some embodiments, the list of trusted locations comprises a list of trusted locations for the location associated with the IP address of the user terminal. As such, the authentication may include determining whether the location associated with the IP address of the user terminal indicates that the user terminal is located within a trusted location. In particular, a list of trusted locations for the location associated with the IP address of the user terminal may include a list of trusted VPN addresses for the user terminal.

In some embodiments, the authentication server transmits the authentication message to the user device when the authentication server receives an authentication request for the user terminal. For example, the authentication request may be received from an application server or a service which the user terminal is requesting access to. In some embodiments, the user terminal sends the authentication request. As such, the authentication server may operate independently of the service or application the user terminal is requesting access to. In some embodiments, the authentication server may provide authentication of a user terminal for a plurality of applications and/or services.

In some embodiments, the authentication server provides different levels of user terminal authentication based on the comparison of the location associated with the IP address of the user terminal and the location information of the user device. In some embodiments, the authentication server may provide different levels of authentication depending on one or more of: the location associated with the IP address of the user terminal, and the location information of the user device. That is to say, the method of the first aspect may provide different levels of authentication to reflect different levels of security associated with different locations (of the user device or the user terminal).

For example, in some embodiments the authentication server provides a first level of user terminal authentication when the location associated with the IP address of the user terminal and the location information are within a first predetermined range of each other, and a second level of user terminal authentication when the location associated with the IP address of the user terminal and the location information are within a second predetermined range of each other, the second predetermined range being greater than the first predetermined range. The first and second levels of user terminal authentication may be used by an application or service to determine content or features the application/service provides to the user terminal. That is to say, the application or service may allow a user terminal having a first authentication level to access a first set of content/features, and the application or service may allow a user terminal having a second authentication level to access a second set of content/features where the first and second sets are different. For example some content/features of the first set of content/features may not be present in the second set. As such, the method of the first aspect may provide different levels of authentication for a user terminal depending on the location information. Where the location associated with the IP address of the user terminal and the location information of the user device indicates that the user terminal is in a relatively secure location, a higher level of user authentication may be provided.

In some embodiments, the method further comprises comparing the location associated with the IP address of the user terminal and the location information of the user device to a blacklist of predetermined locations, wherein if the location associated with the IP address of the user terminal, or the location information of the user device is associated with any of the predetermined locations on the blacklist, authentication of the user terminal is declined. In some embodiments, the authentication server stores the blacklist of predetermined locations. As such, the authentication server may not authenticate a user when the location information of the user device indicates that the user device is located in an unexpected location. The authentication server may determine that the location information of the user device, or the location associated with the IP address of the user terminal is associated with a predetermined location on the blacklist when said location information/location associated with the IP address is within a blacklist distance of a predetermined location on the blacklist. The predetermined location on the blacklist may be individual locations or geographic regions such as continents, countries, counties or states or departments, cities, or towns and the like. The blacklist distance may be any suitable distance depending on the scale of the predetermined locations on the blacklist. For example, depending on the authentication preferences the blacklist distance may in some embodiments be no greater than 1000 km, 100 km, 10 km, or 1 km.

In some embodiments, the authentication message is transmitted to the user device over the RAN as a Short Media Service (SMS) message, an instant message, or a push notification. In particular, where the user device is a mobile device, such as a mobile telephone or smartphone, the authentication message may be transmitted to the mobile device over the RAN, wherein the RAN generates location data of the mobile device when transmitting the authentication message to the mobile device. In some embodiments, where the authentication message is sent as a push notification or an instant message, the instant message/push notification will be delivered to the device via the RAN. For example, the instant message/push notification may be delivered via a node of the RAN (e.g. a transceiver of the RAN), the node of the RAN having associated location information. The location information of the RAN node may be based on an IP address, a location, or identifying data of the RAN node for example. In some embodiments, location information of the RAN node used to deliver the authentication message can be used to generate location information of the user device 50. The RAN network can then provide the location information of the user device 50 to the authentication server 30.

In some embodiments, the RAN comprises a cellular network, wherein the cellular network generates the location information of the user device. In particular, in embodiments where the user device is a mobile device, the cellular network generates location information of the mobile device when transmitting the location information to the mobile device.

According to a second aspect of the disclosure, an authentication server for authenticating a user terminal is provided. The authentication server is configured to perform the method of the first aspect. In particular, it will be appreciated that the authentication server may be configured to perform any of the optional features of the first aspect described above.

According to a third aspect of the disclosure, a user device for authenticating a user terminal is provided. The user device is configured to perform the method of the first aspect. In particular, it will be appreciated that the user device may be configured to perform any of the optional features of the first aspect described above. In some embodiments, the user device may be a mobile device such as a smartphone, mobile phone and the like.

According to a fourth aspect of the disclosure, a Radio Access Network (RAN) for authenticating a user terminal is provided. The RAN is configured to perform the method of the first aspect. In particular, it will be appreciated that the RAN may be configured to perform any of the optional features of the first aspect described above.

According to a fifth aspect of the disclosure, an authentication system is provided. The authentication system comprises the authentication server of the second aspect, the user device of the third aspect and the RAN of the fourth aspect. The authentication system is configured to perform the method of the first aspect. In particular, it will be appreciated that the authentication system may be configured to perform any of the optional features of the first aspect described above. In some embodiments, the authentication system may also incorporate an application server and/or a user terminal in accordance with the aspects described above.

### Brief description of the figures

Embodiments of the disclosure will now be described with reference to the following figures in which:
- Fig. 1 is schematic diagram of a method of authenticating a user terminal;
- Fig. 2 is a block diagram of a method of authenticating a user terminal; and
- Fig. 3 is a block diagram of a further method of authenticating a user terminal.

### Detailed description

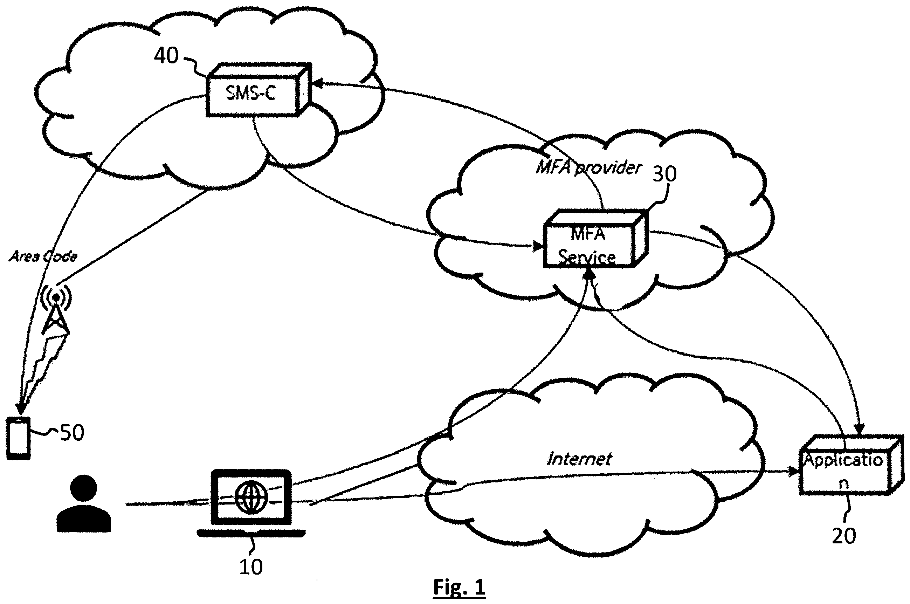

Fig. 1 shows a schematic diagram of a method of authenticating a user terminal according to an embodiment of the disclosure.

As shown in the schematic diagram of Fig. 1 the method involves communication between a user terminal 10, and application server 20, an authentication server 30, a Radio Access Network (RAN) (e.g. a cellular network), and a user device 50.

In the embodiment of Fig. 1, the user terminal 10 is a computing device, for example a desktop computer or a laptop computer. In other embodiments, the user terminal may be any electronic device which is configured to request access to a service or application and requires user authentication. For example, the user terminal may be a mobile device, such as a smartphone or tablet computer.

The user terminal 10 of Fig. 1 is configured to communicate with an application server 20 via the internet. Communications between the application server and the user terminal 10 may include, at least in part, transmitting the communication over a wireless network. In order to facilitate such internet-based communication, the user terminal 10 has an Internet Protocol (IP) address. The IP address of the user terminal 10 allows various devices connected to the internet to direct communications (i.e. messages or data packets) to the user terminal 10.

According to methods of this disclosure, a user may use the user terminal 10 to request access to an application or service provided by the application server 20. As such, the user terminal 10 is understood to be a computing device which a user is requesting to be authorised to access the application or service (i.e. the user is requesting authentication of the user terminal 10).

As shown in Fig. 1, the application server 20 is a server or similar computing device. The user terminal 10 is configured to request access to the application server 20. On receipt of a request for access from a user terminal 10, the application server 20 is configured to request that the user terminal undergoes an authentication process with the authentication server 30 as described further below. In some embodiments, the user terminal 10 may contact the authentication server 30 to request authentication prior to making contact with the application server 20 (i.e. pre-authorisation of the user terminal 10).

The application server 20 may be any computer server on which an application runs or a service is provided.

The authentication server 30 is configured to authenticate a user terminal 10. The authentication server 30 may be any suitable computer server having access to internet communications and also communications with a radio access network (RAN) 40. The authentication server 30 also includes a database comprising user information of the user terminals to be authenticated by the authentication server 30. In some embodiments, the authentication message may comprise a string of alphanumeric characters (an alphanumeric code), an image such as a QR code, or any other suitable message suitable for authorising a user terminal 10.

As shown in Fig. 1, the authentication server 30 is configured to communicate with the user terminal 10. In the embodiment of Fig. 1, the authentication server communicates with the user terminal 10 via the internet. The user terminal 10 is also configured to communicate with the authentication server 30. Through communications between the user terminal 10 and the authentication server 30, the authentication server 30 may obtain various pieces of information (factors) which may be used to identify and authenticate the user terminal 10. The authentication server 30 is configured to transmit an authentication message to the user device 50.

The RAN 40 is configured to transmit communications from the authentication server 30 to the user device 50. It will be appreciated that the RAN 40 may form only part of the communication infrastructure which allows the authentication server 30 to communicate with the user device 50. For example, the authentication server 30 may transmit an authentication message to the RAN 40 via a core network (not shown).

As part of the process of transmitting a communication to the user device 50, the RAN is configured to generate location information of the user device 50. In some embodiments, the RAN 40 comprises a plurality of nodes, wherein each node of the RAN is capable of communicating with the user device 50. When the RAN 40 transmits an authentication message to the user device 50, the RAN 40 may generate location information of the user device 50 based on the location of the node of the RAN 40 used to transmit the authentication message to the user device 50. The RAN 40 is configured to send the location information of the user device 50 to the authentication server 30. Importantly, the process of generating the location information by the RAN 40 may be independent of the user device 50, thereby providing an additional layer of security to the method of authentication.

In the embodiment of Fig. 1, the RAN 40 comprises a cellular network. As such, the RAN 40 comprises a plurality of cells, each cell being served by at least one transceiver. Each transceiver is configured to communicate wirelessly with the user device 50. In the RAN 40, each transceiver has a known location. As such, the RAN 40 is a wireless network which is configured to communicate with the user device 50.

The user device 50 is capable of communicating over the RAN 40 with the authentication server. For example, the user device 50 may be a mobile device capable of communicating over mobile networks according to any defined mobile standard, for example, 2G, 3G, 4G, 5G or any other.

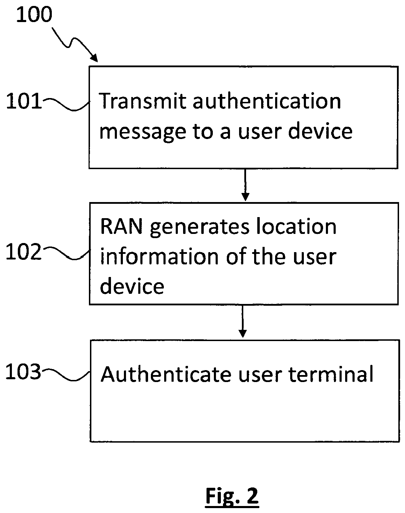

Next, a method 100 of authenticating a user terminal 10 will be described with reference to Fig. 2. The method 100 may be performed by system depicted in Fig. 1.

Method 100 of authenticating a user terminal 10 may be performed when the authentication server receives a request to authenticate a user terminal 10. The request to authenticate a user terminal 10 may be received from an application server 20 or a user terminal 10. The request to authenticate a user terminal may include information identifying the user terminal 10, for example an IP address of the user terminal 10.

Where a user terminal 10 sends the request for authentication to the authentication server 30, the user terminal 10 may also send a username and password. The username and password may be used by the authentication server 30 as part of the method 100 of authenticating the user terminal. Where an application server 20 sends the request for authentication to the authentication server 30, the authentication server 30 may request a username and password from the user terminal 10 before proceeding with the method 100, should a username and password be required for the method 100.

Before proceeding with the method 100, the authentication server 30 may check the password and username provided against a database. Where the username and password match, the authentication server 30 may then retrieve information concerning a user device 50 associated with the username and password. Alternatively, the application server 20 may provide information identifying the user device 50 to be used as part of the method 100.

Upon receiving a request to authenticate a user terminal, in a first step 101, the authentication server 30 transmits an authentication message from the authentication server 30 to a user device 50 associated with the user terminal 10. As discussed above, the association between the user terminal 10 and the user device 50 may be provided by the application server 20. Alternatively, the authentication server 30 may use a username and password provided by the user terminal 10 to identify a user device 50 associated with user terminal by reference to a database of the authentication server 30.

Transmitting the authentication message to the user terminal 50 includes transmitting the authentication message to the user device 50 at least in part over the RAN 40. In some embodiments, the RAN 40 may be a cellular network. Accordingly, the authentication message may, in some embodiments, be sent as a Short Media Service (SMS) message to the user device 50, which may be a mobile device and the like. Where the authentication message is transmitted as a SMS message, the authentication message may be an alphanumeric code. In some embodiments, the authentication message may be transmitted using a different communication technology. For example, in some embodiments, the authentication message may be transmitted as a Multimedia Messaging Service (MMS), or other multimedia types of message. Accordingly, it will be appreciated than in some embodiments, the authentication message may comprise one or more of: audio, video, text.

In some embodiments, the authentication message may be sent as an instant message or a push notification via the RAN 40. In such embodiments, the authentication server 30 may request that the RAN 40 provides location information relating to the location of the user device 50. For example, when the authentication message is sent as a push notification or an instant message, the instant message/push notification will be delivered to the device via the RAN 40. Specifically, the instant message/push notification will be delivered via a node of the RAN 40 (e.g. a transceiver of the RAN). The RAN node will have its own IP address, location, or some other form of identifying data that can be used to generate location information of the user device 50. The RAN network can then provide the location information of the user device 50 to the authentication server 30.

In step 102, the RAN 40 generates location information of the user device 50 when the RAN 40 transmits the authentication message to the user device 50. For example, where the authentication message is transmitted as an SMS message, the Short Message Service Centre (SMSC) responsible for transmitting the SMS message to the user device 50 generates location information of the user device 50 when the authentication message (SMS message) is transmitted to the user device 50 over the RAN 40. For example, when transmitting the SMS message to the user device 50 the SMSC may identify the cell, or transceiver used to transmit the SMS message to the user device 50. For example, the SMSC may record the Cell ID (CID) associated with the transceiver which transmitted the SMS message to the user device 50. Based on the CID or other identifier such as a Location Area Code (LAC), or Cell Global Identity (CGI), information pertaining to the location of the user device 50 which receives the SMS message may be determined. For example, based on a CID or LAC, the authentication service may determine that the user device is located within a certain geographic region. As such, the generation of a CID, LAC, or CGI by the RAN 40 when transmitting the SMS message to the user device is a generation of location information of the user device 50.

The RAN 40 may convert the CID, LAC, CGI or other identifier of a cell or transceiver used to transmit the authentication message to the user device to any other form of location information for identifying the user device, such as co-ordinates or a geographic region. The RAN 40 may then transmit the co-ordinates or geographic region (or the location information) to the authentication server 30. Alternatively, the RAN 40 may transmit the CID, LAC, CGI or other identifier of a cell or transceiver used to transmit the authentication message to the user device 50 directly to the authentication server 30, wherein the authentication server 30 interprets the CID, LAC, CGI or other identifier of a cell or transceiver with reference to a suitable database.

It will be appreciated that in embodiments where the RAN 40 transmits the authentication message via a MMS message, or other types of multimedia message, the RAN 40 will generate location information based on a CID, LAC, CGI or other identifier of a cell or transceiver used to transmit the authentication message.

In step 103, the user terminal 10 is authenticated based on a comparison of a location associated with the IP address of the user terminal 10 and the location information of the user device 50. For example, in the embodiment of Fig. 1 the authentication server 30 may authenticate the user terminal 10 by comparing a location associated with the IP address of the user terminal 10 and the location information provided by the RAN 40. For example, the location associated with the IP address of the user terminal 10 may be indicative of a geographic region or location of the user terminal 10. The location information provided by the RAN 40 may provide indicate co-ordinates of a geographic region in which the user device 50 is located. The authentication server may the compare, for example, the geographic region of the user terminal 10 with the geographic region of the user terminal 10 to determine whether the user terminal 10 should be authenticated. Where there is a significant divergence between the location of the user terminal 10 and the location of the user device 50 (e.g. the user terminal 10 and the user device 50 are indicated to be located in different countries), the authentication server 30 may decline to authenticate the user terminal 10.

In some embodiments, the authentication server 30 may authenticate the user terminal 10 when the location associated with the IP address of the user terminal 10 and the location information of the user device 50 are within a predetermined distance of each other.

Where the location information of the user device 50 is derived from a SMS message, the location information may indicate that the user device 50 is located in a geographic region centred on the cell used to transmit the SMS message. Thus, the size of the geographic region in which the user device 50 may be located may correspond to the range of the cell. For example, a geographic region associated with a cell may be no greater than 50 km, 25 km, 20 km, 10 km, 5 km, 2 km, or 1 km in radius, centred on the cell location. Associations between cells and geographic regions may be stored in a database, for example a database of the authentication server 30.

The location information associated with the IP address of the user terminal 10 may be derived from an IP address database and the like. In the embodiment of Fig. 1, the authentication server 30 may determine a geographic region associated with the user terminal based on the IP address. The size of the geographic region may depend on the information available to the authentication server 30 regarding the IP address associated with the user terminal 10. For example, the authentication server 30 may determine a geographic region (e.g. a country, county or state or department, or city, or town) by comparing the IP address to an IP address database. In some embodiments, the authentication server 30 may have additional information regarding an address or location associated with an IP address associated with a user terminal 10. For example, the authentication server 30 may have a database comprising information associating a place of business or an address with an IP address of a user terminal 10.

Accordingly, in step 103 the authentication server 30 may compare the location associated with the IP address of the user terminal 10 and the location information of the user device 50 to determine if they are within a predetermined distance of each other. Where both the location associated with the IP address of the user terminal 10 and the location information of the user device 50 are geographic regions, the authentication server 30 may, in some embodiments determine if there is any overlap between the two regions. Alternatively, the authentication server 30 may determine if a centre of each region (e.g. a centre of mass of each geographic region) are located within a predetermined distance of each other. In some embodiments where one of the location associated with the IP address of the user terminal 10 and the location information of the user device 50 is a geographic region and the other is a point location (e.g. a set of co-ordinates), the authentication server may determine whether the location is located within the geographic region, or within a predetermined distance of the geographic region. In embodiments where both the location associated with the IP address of the user terminal 10 and the location information of the user device 50 are point locations, the authentication server 30 may determine whether the two point locations are located within a predetermined distance of each other.

In embodiments where the authentication server determines whether the location associated with the IP address of the user terminal 10 and the location information of the user device 50 are within a predetermined distance of each other, the predetermined distance may be selected based on the desired security level of the authentication. A shorter predetermined distance provides greater security, but may increase the generation of false negatives. Depending on the authentication preferences, the predetermined distance may in some embodiments be no greater than 100 km, 10 km, 1 km, 500 m, 100 m, 50 m, or 10 m.

Where the authentication server determines that the user terminal 10 and the user device 50 are located sufficiently closely to each other, the authentication server 30 may transmit an approval message to the application server 20 or take any other suitable action to signal that the user terminal 10 has been authenticated.

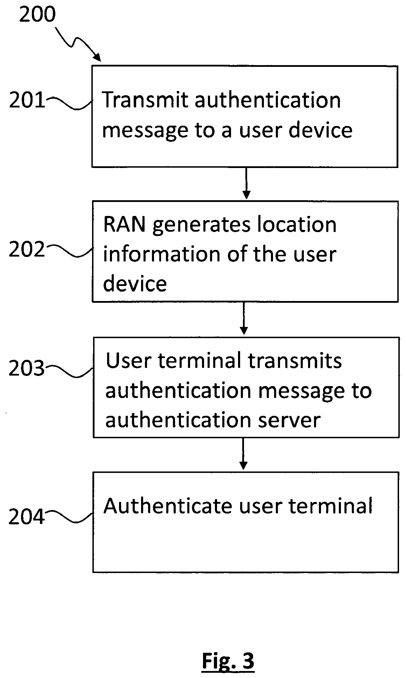

In some embodiments, the authentication server 30 may also take additional information into account when deciding whether to authenticate the user terminal 10. Fig. 3 shows a further embodiment of a method 200 in which a user terminal 10 is authenticated. It will be appreciated that the method of Fig. 3 may be performed by the system shown in Fig. 1.

In step 201 of Fig. 3, the authentication server 30 transmits an authentication message to a user device 50. As such, step 201 may be performed in a similar manner to step 101 of method 100.

In step 201, the RAN 40 generates location information of the user device 50. As such, step 202 of Fig. 3 may be performed in a similar manner to step 102 of method 100.

In some embodiments, the authentication message received by the user device 50 may also be input into the user terminal 10 in order to provide an additional factor for authentication. As such, in step 203, the user terminal may transmit the authentication message to the authentication server 30. For example, a user may input the authentication message (e.g. an alphanumeric code or any other suitable message) received by the user device 50 into the user terminal 10. The user terminal 10 may then transmit the authentication message back to the authentication server 30 via the internet.

In step 204, the authentication server 30 may then authenticate the user terminal 10 based on a comparison of the location associated with the IP address of the user terminal and the location information of the user device, and the authentication message. Thus, in addition to the comparison performed in step 103 of method 100, the method 200 may also check that the authentication message transmitted by the authentication server 30 to the user device 50 is the same as the authentication message received by the authentication server 30 from the user terminal 10.

Accordingly, method 200 is one example of a method of authenticating a user terminal 10 which uses a plurality of pieces of information (factors) into account when deciding whether to authenticate a user terminal 10 (multifactor authentication).

In some embodiments, the authentication server 30 may comprises a database comprising a list of trusted locations (or a list of trusted geographic regions). The list of trusted locations may be a list of trusted locations of the user device 50 and/or a list of trusted locations of the user terminal 10. As such, the steps 103, 204 of authenticating a user terminal may include determining whether the location information of the user device 50 generated by the RAN 40 indicates that the user device 50 is located within, or within a predetermined distance of, a trusted location of the list of trusted locations for the user device 50. Similarly, the authentication may include determining whether the location associated with the IP address of the user terminal 10 indicates that the user terminal 10 is located within, or within a predetermined distance of, a trusted location of the list of trusted locations for the user terminal 10. In particular, a list of trusted locations for the location associated with the IP address of the user terminal 10 may include a list of trusted VPN addresses for the user terminal 10. In particular, in some embodiments where the user terminal 10 communicates over a VPN, the authentication server 30 may include a list of trusted locations for the user device 50 which are associated with the IP address of the VPN. Accordingly, methods according to this disclosure may also be applied to user terminals 10 requesting authentication via a VPN.

In some embodiments, the authentication server 30 is configured to provide different levels of user terminal authentication based on the comparison of the location associated with the IP address of the user terminal 10 and the location information of the user device 50. The authentication server 30 may also take into account any other pieces of information (factors) provided to the authentication server 30 as described above.

For example, in some embodiments, the authentication server is configured to provide a first level of user terminal authentication when the location associated with the IP address of the user terminal 10 and the location information of the user device 50 are within a first predetermined range of each other, and a second level of user terminal authentication when the location associated with the IP address of the user terminal 10 and the location information of the user device 50 are within a second predetermined range of each other, the second predetermined range being greater than the first predetermined range. For example, in one embodiment the first predetermined range may be no greater than 10 km, and the second predetermined range may be no greater than 100 km. The relative sizes of the first and second predetermined ranges may be selected according to the desired functionality of the authentication system and the type of location data available for the user terminal 10 and the user device 50.

In addition to the list of trusted locations (or as an alternative to), in some embodiments the authentication server may comprise a database comprising a blacklist of predetermined locations. The blacklist of predetermined locations are a list of locations for the user device 50 and/or the user terminal 10 where the user terminal is not to be authenticated. As such, the authentication server may compare the location associated with the IP address of the user terminal 10 and the location information of the user device 50 to a blacklist of predetermined locations, wherein if the location associated with the IP address of the user terminal 10 and/or the location information of the user device 50 is associated with any of the predetermined locations on the blacklist, authentication of the user terminal 10 is declined.

Accordingly, methods according to this disclosure provide for the authentication of a user terminal 10 which incorporates information from the RAN 40. As the location information provided by the RAN 40 is independent of the user terminal 10 and the user device 50, the method of authentication is resistant to interference from attempts to impersonate a user device 50.

## Claims

1. A method of authenticating a user terminal having an associated IP address comprising:
transmitting an authentication message from an authentication server to a user device associated with the user terminal,
wherein the authentication message is transmitted to the user device at least in part over a Radio Access Network (RAN),
wherein the RAN generates location information of the user device when transmitting the authentication message to the user device;
authenticating the user terminal based on a comparison of a location associated with the IP address of the user terminal and the location information of the user device.

2. A method according to claim 1, further comprising
inputting the authentication message transmitted to the user device into the user terminal, wherein the user terminal transmits the authentication message to the authentication server, and
the authentication server authenticates the user terminal based on a comparison of the location associated with the IP address of the user terminal and the location information of the user device, and the authentication message.

3. A method according to claim 1 or claim 2, wherein
the user terminal is authenticated when the location associated with the IP address and the location information of the user device are within a predetermined distance of each other.

4. A method according to any of claims 1 to 3, wherein
the IP address associated with the user terminal is an IP address of a Virtual Private Network (VPN) or the IP address of the user terminal.

5. A method according to any of claims 1 to 4, wherein
the authentication server includes a list of trusted locations, and
the user terminal is authenticated based on a comparison of the location associated with the IP address of the user terminal, the location information of the user device, and the list of trusted locations.

6. A method according to any of claims 1 to 5, wherein
the authentication server transmits the authentication message to the user device when the authentication server receives an authentication request for the user terminal.

7. A method according to claim 6, wherein
the authentication server receives the authentication request from the user terminal or an application server.

8. A method according to any of claims 1 to 7, wherein
the authentication server provides different levels of user terminal authentication based on the comparison of the location associated with the IP address of the user terminal and the location information of the user device.

9. A method according to claim 8, wherein
the authentication server provides a first level of user terminal authentication when the location associated with the IP address of the user terminal and the location information of the user device are within a first predetermined range of each other, and a second level of user terminal authentication when the location associated with the IP address of the user terminal and the location information of the user device are within a second predetermined range of each other, the second predetermined range being greater than the first predetermined range.

10. A method according to any of claims 1 to 9, further comprising
comparing the location associated with the IP address of the user terminal and the location information of the user device to a blacklist of predetermined locations, wherein if the location associated with the IP address of the user terminal or the location information is associated with any of the predetermined locations on the blacklist, authentication of the user terminal is declined.

11. A method according to any of claims 1 to 10,
wherein the authentication message is transmitted to the user device over the RAN as a Short Media Service (SMS) message, an instant message, or a push notification.

12. A method according to any of claims 1 to 11, wherein
the RAN comprises a cellular network, wherein the cellular network generates the location information of the user device.

13. An authentication server for authenticating a user terminal, wherein
the authentication server is configured to perform the method of any of claims 1 to 12.

14. A user device for authenticating a user terminal, wherein
the user device is configured to perform the method of any of claims 1 to 12.

15. A Radio Access Network (RAN) for authenticating a user terminal, wherein
the RAN is configured to perform the method of any of claims 1 to 12.
